Europäisches Patentamt

(19) **European Patent Office**

**Office européen des brevets**

(11) Publication number: **0 101 159**
**B1**

(12) **EUROPEAN PATENT SPECIFICATION**

(45) Date of publication of patent specification: **27.04.88**

(51) Int. Cl.⁴: **F 16 C 32/06, F 16 C 17/22**

(21) Application number: **83303377.2**

(22) Date of filing: **10.06.83**

(54) Fluid bearings.

(30) Priority: **21.06.82 GB 8217961**

(43) Date of publication of application:
**22.02.84 Bulletin 84/08**

(45) Publication of the grant of the patent:
**27.04.88 Bulletin 88/17**

(84) Designated Contracting States:
**CH DE FR GB IT LI**

(56) References cited:
**DE-A-1 525 121**
**DE-A-2 149 391**
**DE-B-1 911 500**
**FR-A-1 550 574**
**FR-A-2 115 290**
**GB-A-1 027 395**
**US-A-3 851 933**

(73) Proprietor: **NATIONAL RESEARCH
DEVELOPMENT CORPORATION**
**101 Newington Causeway**
**London SE1 6BU (GB)**

(72) Inventor: **Mohsin, Mohammed Ezzat**
**14 Frampton Close**
**Alkrington Manchester M24 1EY (GB)**

(74) Representative: **Stables, Patrick Antony**
**Patent Department National Research
Development Corporation 101 Newington
Causeway**
**London SE1 6BU (GB)**

Courier Press, Leamington Spa, England.

## Description

This invention relates to fluid bearings of the kind in which at least two fluid filled bearing pads mounted in one of the bearing members face in opposed directions and confront the other bearing member so that their opposed reactions against it tend to locate it positively—that is to say, against movement of either sign—in at least one linear direction. Such a fluid bearing will be referred to as a fluid bearing of the kind described.

The invention applies particularly to bearings, for instance journal bearings, in which there is high relative speed between the stationary and moving bearing members. In a typical hydrostatic journal bearing to support a shaft rotating at high speed, opposed bearing pads confronting the shaft are formed at angular intervals and in a common radial plane in the housing surrounding the shaft, and power has to be expended to overcome shearing friction of the bearing fluid in two places in particular. Firstly under the lands, that is to say the border areas immediately surrounding the bearing pads and through which the fluid supplied from those pads must pass as a thin film in order to reach exhaust. Secondly, within the pads themselves where, because of the frictional drag of the moving member, a circulatory motion may be set up so leading to shearing between oppositely moving layers of fluid in contact with each other.

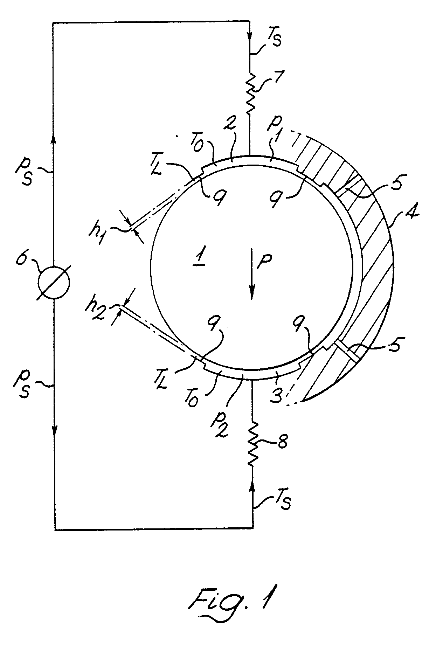

Figure 1 of the accompanying drawings shows a conventional hydrostatic journal bearing in diagrammatic radial section. A horizontal shaft 1 is supported by opposed pads 2, 3 formed within a housing 4. Exhaust outlets are indicated at 5. Pads 2, 3 are separately connected to a fluid pressure source 6 by way of resistors 7, 8 respectively. References $p_s$, $p_1$ and $p_2$ represent the fluid pressures at source 6, pad 2 and pad 3 respectively, while $T_s$, $T_0$ and $T_L$ respectively indicate the fluid temperatures upstream of resistors 7 and 8, in pads 2 and 3 und in the bearing clearances separating lands 9 from shaft 1. The work done to overcome the shearing friction just referred to manifests itself in heat, which will leave $T_s$ substantially unchanged, but will increase $T_0$ and greatly increase $T_L$. These rises will diminish the viscosity of the fluid within pads 2, 3 and under lands 9 so that the resistance offered by the bearing clearances to the escape of fluid from the pads diminishes also. Pressures $p_1$ and $p_2$ therefore fall. This results in a decrease in the design pressure ratios of the bearing, that is to say a decrease in the values of the ratios $p_1/p_s$ and $p_2/p_s$, so affecting the static and dynamic performance for which the bearing was designed. A fall in $p_2$, in particular may decrease the load carrying capacity of the bearing, and a continued fall will lead to bearing collapse.

It will be apparent that in the known bearing already described, a change in the radial dimensions $h_1$ and $h_2$ of the bearing clearances between the shaft and the lands of pads 2 and 3 respectively can result either from a change in the vertical load upon the shaft 1, which changes the resultant vertical force P exerted by the shaft, or from changes in temperatures $T_0$ and $T_L$ as already described. For a simple bearing as shown in Figure 1 the size of the pads and the value of $p_s$ will be chosen so that no possible variation in P can result in too great a change in $h_1$ or $h_2$. With the high rotational speeds required of much modern equipment, however, it is harder to keep $h_1$ and $h_2$ as well as $p_1/p_s$ and $p_2/p_s$ within acceptable limits when $T_0$ and $T_L$ vary from the reasons already described, and the present invention is aimed primarily at removing or at least diminishing the effect that such temperature changes may have upon the clearances and pressure ratios in such a simple bearing.

It will thus be seen that a typical hydrostatic journal bearing of the known art, as just described presents the problem that variation of the fluid temperature at any one of the bearing pads can result in the fluid pressure at that pad varying in a manner that is closely related to the pressures existing at any of the other pads. Such variations limit the range of static and dynamic performance that can be expected from the bearing. It is an object of the present invention to help avoid this problem by designing a bearing so that the pressures existing at the individual bearing pads are related to all times by a law which is independent of fluid temperature, and which preferably ensures that the sum of all the pad pressures is constant at all times.

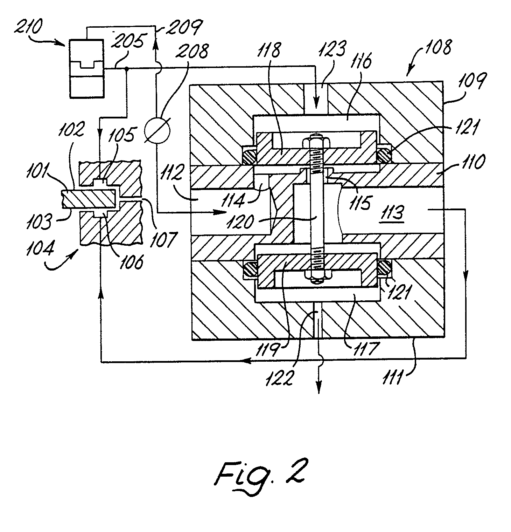

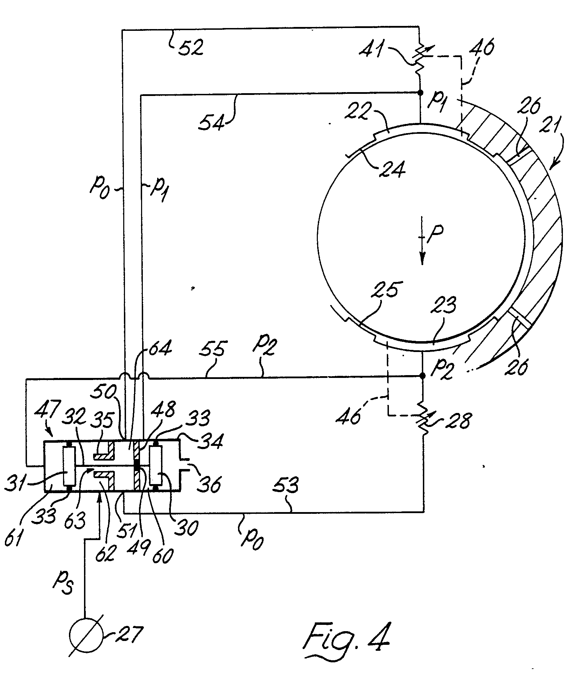

Before proceeding to a statement of the present invention and a description of apparatus according to it, reference should be made to another known type of fluid bearing to differentiate it from the present invention. UK Patent No. 1027395 shows examples of such a bearing and one of the figures (Figure 4) of the specification of that patent, which is a diagrammatic section through a longitudinally-sliding bearing and associated fluid circuit components, is now essentially reproduced as Figure 2 of the present application. In the bearing shown in this Figure two opposed pads 105 and 106, formed in the stationary member 104 of the bearing, confront the horizontally sliding moving member 101 and hold it at constant height in the vertical plane. Pad 105 is connected to pressure source 208 by way of conduit 209, a special regulating valve 210 and conduit 205. The resistance offered by valve 210 to the passage of fluid through it varies automatically, and in an inverse sense, relative to the instantaneous pressure within pad 105. Reference 108 indicates an "adding valve" comprising opposed pistons 118 and 119 mounted on a common shaft 120. When fluid at the pressure of source 208 is supplied to inlet 112, and fluid at the pressure of pad 105 is supplied to inlet 123, piston assembly 118—120 takes up a position such that the pressure of fluid leaving outlet 113 is equal to the difference between the pressures at inlets 112 and 123. Outlet 113 is connected to pad 106.

The text of UK Patent No. 1027395 indicates at the vertical location of the horizontally sliding member 101 relative to stationary member 104 is a function of the hydraulic resistance which the upper and lower vertical clearances between the two members offer to the escaping flow of fluid from pads 105, 106 respectively. The Patent teaches that within a given working range a regulating valve such as item 210 will respond to a change in the relative vertical load between members 101, 104 by adjusting the fluid pressures within pads 105, 106 so that the flow resistances of the upper and lower clearances remain unchanged; the relative vertical positions of the two members therefore remain unchanged also. As the Patent also explains, the effective function of adding valve 108 is to nearly double the working range, so that pressures in pads 105, 106 can each vary within the range 0.1 to 0.8 times the supply pressure $p_s$ to counteract the tendency of the two members to change their relative vertical position in response to change of load. But since for a given pad configuration the resistance to the escaping flow of fluid from that pad is:

$$\frac{K \cdot \mu L}{h^3} \qquad (i)$$

(where K is a constant, h is the vertical dimension of the clearance beneath the lands of the pad, and $\mu L$ is the viscosity of the fluid within that clearance) it follows that for the resistance to remain constant then the viscosity $\mu L$ must remain constant also. The truth is however that because viscosity is temperature-dependent this will only happen if the temperature of the fluid within the clearance also remains constant. In practice it would, in the apparatus shown in Figure 4 of UK Patent No. 1027395, because that Figure illustrates a bearing in which only slight relative velocity is to be expected between members 101 and 104 and therefore negligible generation of heat. In such conditions the stated pressure relationship at 105 and 106 and with it the object of the invention of UK No. 1027395, namely constant gaps in the clearances adjacent pads 105 and 106 despite variation in bearing load, would have been achieved. However should there have been rapid relative movement between members 101 and 104, as would have been the case if member 101 had been a fast spinning shaft within a journal bearing, then the fluid temperature within pads 105, 106 and especially underneath the surrounding lands would have risen to a value far higher than that of the fluid at the source 208 or elsewhere in the circuit. In such circumstances, irrespective of whether the bearing load had changed or not, change in temperature within the bearing would have caused the relative positions of the members 101, 104 to change because the supplies of fluid to the pads 105, 106 are asymmetrical, the supply to pad 105 containing the resistance provided by valve 210 but the supply to pad 106 containing no such resistance. If H is the clearance at pad 105, valve 210 ensures the $\mu L/H^3$ remains constant provided the load between members 101 and 104 remains within the working range of the bearing. Therefore H cannot remain constant unless $\mu L$ also remains constant, and therefore when there is a change in the temperature $T_L$ of the fluid in the clearance the dimension H (and the corresponding dimension for lower pad 106) will not stay constant but will instead change to a value that sets up a new equilibrium position satisfying the new pressures in pads 105, 106 resulting from the change in $\mu L$.

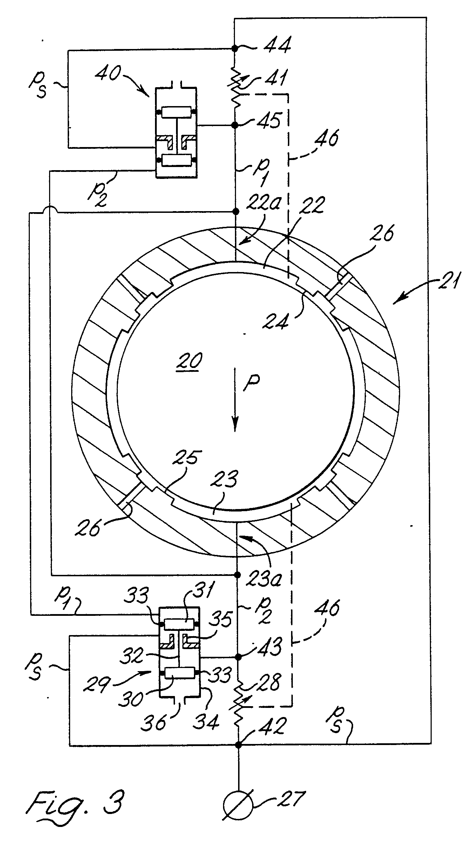

The present invention is defined by the claims and will now be described, by way of example, with reference to Figures 3 and 4 of the accompanying drawings which are diagrammatic radial sections through two alternative hydrostatic journal bearings.

While the invention applies to journal bearings with more than two pads, in which case more regulating valves would typically be required to maintain the appropriate relationship between pad pressures, Figure 3 shows a bearing in which a shaft 20, rotatable about a horizontal axis, is supported within a housing 21 by opposed pads 22, 23 surrounded by lands 24, 25 respectively. Fluid under pressure supplied to pads 22, 23 escapes to exhausts 26 by way of the clearances between the shaft 20 and lands 24, 25 respectively. The fluid is supplied to both pads from a common source 27, from which it reaches pad 23 by way of fluid conduit means 23a including a restrictor 28 which may for instance be of either viscous or orifice type, and from which it reaches pad 22 by way of fluid conduit means 22a which include a similar restrictor 41. Arranged in parallel with restrictor 28 the supply to pad 23 also includes an adding valve 29 of known type, similar to valve 108 of Figure 2. Adding valve 29 acts as a pressure-summing means, that is to say means operative to ensure that the sum of two variable pressures existing within the bearing is always equal to a third pressure existing within the system of which the bearing is part; Such means will henceforth be referred to as pressure-summing means as hereinbefore described. Valve 29 comprises two pistons 30, 31 mounted on a common shaft 32. Sealing "O"rings 33 are carried on the rims of pistons 30 and 31, allowing those pistons limited sliding travel over the inner wall of cylindrical housing 34 without breaking sealing contact with it. Movement of the piston assembly 30—32 varies the dimensions of the clearance between piston 30 and a fixed ring 35 within the valve. If pressures $p_s$, $p_1$ and $p_2$ exist at source 27 and pads 22 and 23 respectively, it will be seen that each of these three pressures is associated with a different section of the interior of adding valve 29. Because the bottom end of the valve is vented at 36 and the piston assembly 30—32 is free to move in response to the pressures to which it is exposed, it will be seen that pressure $p_2$, as existing at junction 43 which lies downstream both of restrictor 28 and of valve 29, must always be equal to the difference

between supply pressure $p_s$ (fed to the valve from junction 42 in the supply line) and pressure $p_1$ existing in pad 22.

The supply to pad 22 is symmetrical in that it includes a second adding valve 40, drawing its supply pressure $p_s$ from junction 44 in the supply line, and thus arranged in parallel to restrictor 41. Valve 40 is similar in construction and operation to valve 29. The freedom of movement of the piston assembly will ensure that the pressure $p_1$ existing at junction 45 which lies downstream both of restrictor 41 and of valve 40 must always be equal to the difference between the supply pressure $p_s$ and the pressure $p_2$ existing in pad 23.

If pads 22 and 23 are of equal area so that their combined area is A, and if the resultant downward force exerted by shaft 20 is P, then the equation

$$(P_s - p_1) = P/A \qquad \text{(ii)}$$

must be fulfilled. Since valves 29 and 40 and the supplies of fluid to and from them ensure also that

$$p_1 + p_2 = p_s = \text{constant} \qquad \text{(iii)}$$

the pressure $p_1$ must always equal

$$\tfrac{1}{2}(p_s - P/A) \qquad \text{(iv)}$$

and pressure $p_2$ must always equal

$$\tfrac{1}{2}(p_s + P/A) \qquad \text{(v)}$$

Because all three of the quantities, P, A, and $p_s$ are independent of temperature the functions (iv) and (v) are similarly independent of the fluid temperature existing in the vicinity of pads 22 and 23 and of any difference between those temperatures and the temperature at source 27. Therefore if P is a positive quantity, the dimension of the clearance between the shaft and lands 24, 25 will be independent of fluid temperature, theoretically up to the limiting situation where $p_2$ or $p_1$ becomes zero. Contrast this with the behaviour of the bearing in Figure 4 of UK Patent No. 1027395. Because the pressures at the pads are determined by different formulae and temperature change of the fluid under the lands has different effects upon the fluid supplies to pads 105 and 106, it will lead to changes in the pad pressures and thus to change in the clearance gaps adjacent these two pads.

Functions (iv) and (v), taken individually, are of course *not* independent of variations in P. Variations in this quantity will therefore result in variations of the clearances beneath lands 25 and 24, even though fluid temperature changes will not. The bearing must therefore be designed so that the changes in clearance brought about by any possible variations in load lie within acceptable limits.

Stiffness may be improved still further if restrictors 41, 28 are variable instead of constant, each restrictor being linked (by means shown diagrammatically at 46) to its respective pad 22, 23 so that the setting of the restrictor reflects the pressure existing at the pad, provided the two resistors respond symmetrically to changes in the temperature of the fluid in the vicinity of pads 22 and 23. The restrictors may, for example, each be of the diaphragm-controlled kind that is described in UK Patent No. 1027395, and that would typically be used for the valve 210 shown in Figure 2 of the present specification.

The alternative version of the invention shown in Figure 4 has many similarities with that shown in Figure 3, and parts that work essentially similarly in the two figures are indicated by the same reference numerals. However, the single adding valve 47 of Figure 4 differs from either of the valves 29 and 40 of Figure 3 by being divided into two halves by a fixed and impervious annular plate 48, the central hole of which is filled by a sealing gland 49 through which the shaft 32 passes.

compartments 60, 61 of valve 47 are in communication with pads 22, 23 by way of lines 54, 55 respectively, and the pressures existing within those compartments therefore match the pressures at the respective pads at all times. Fluid at pressure $p_s$ from source 27 enters another compartment 62 of the valve and passes from it by way of a resistance 63 into yet another compartment 64. The pressure $p_o$ which exists within this compartment, and which is connected to pads 22 and 23 by way of lines 52 and 53, therefore bears upon neither of pistons 30, 31. The pressures at the respective pads $p_1$ and $p_2$ are supplied as control inputs to the summing valve by lines 54, 55. For yet further improvement in performance the restrictors 41 and 28 may be variable (provided they respond similarly to temperature changes) and may be regulated (by connections 46) by the pressures existing at pads 22 and 23, in the manner already described with reference to Figure 3.

The performances of the constructions shown in Figures 3 and 4 are similar, the main differences being that the construction of Figure 3 achieves low pressure drop (because each summing valve 40, 29 is in parallel with its associated resistor 41, 28) but at the price of using two summing valves, whereas the construction of Figure 4 uses only the single summing valve 47 but the connection between the valve and each pad includes a resistor (41, 28) in series with the valve, which tends to create a higher pressure drop.

**Claims**

1. A hydrostatic shaft bearing comprising in a housing (21) for a shaft (20) first and second bearing pads (22, 23) connected to a common fluid source (27), the pads being in alignment but facing in opposite directions thereby to locate the shaft positively therebetween, characterised in that a respective pressure-adding means (40, 29) is provided in the fluid line between the source and each pressure pad, each pressure-adding means being operable to maintain the sum of the pad pressures substantially equal to the source pressure.

2. A hydrostatic shaft bearing comprising in a housing (21) for a shaft (20) first and second bearing pads (22, 23) connected to a common fluid source (27), the pads being in alignment but facing in opposite directions thereby to locate the shaft positively therebetween, characterised in that the source is connected to both pressure pads via a common restrictor (63) in a pressure-adding means (47) which is operable to maintain the sum of the pad pressures substantially equal to the source pressure.

## Patentansprüche

1. Hydrostatisches Wellenlager mit in einem Gehäuse (21) für eine Welle (20) angeordneten ersten und zweiten Lagerkammern (22, 23), die an eine gemeinsame Strömungsmittelquelle (27) angeschlossen sind, wobei die Lagerkammern fluchtend, aber in entgegengesetzten Richtungen weisend angeordnet sind und dadurch die Welle zwangsläufig zwischen sich positionieren, dadurch gekennzeichnet, daß jeweils ein Druckadditionsorgan (40, 29) in der Strömungsmittelleitung zwischen der Quelle und jeder Druckkammer vorgesehen ist, wobei jedes Druckadditionsorgan so betätigbar ist, daß die Summe der Kammerdrücke im wesentlichen gleich dem Quellendruck gehalten wird.

2. Hydrostatisches Wellenlager mit in einem Gehäuse (21) für eine Welle (20) angeordneten ersten und zweiten Lagerkammern (22, 23), die an eine gemeinsame Druckmittelquelle (27) angeschlossen sind, wobei die Kammern fluchtend, aber in entgegengesetzten Richtungen weisend angeordnet sind und dadurch die Welle zwangsläufig zwischen sich positionieren, dadurch gekennzeichnet, daß die Quelle an beide Druckkammern über ein gemeinsame Drossel (63) in einem Druckadditionsorgan (47) angeschlossen ist, das so betätigbar ist, daß die Summe der Kammerdrücke im wesentlichen gleich dem Quellendruck gehalten wird.

## Revendications

1. Palier hydrostatique d'arbre comprenant, dans un boîtier (21) destiné à loger un arbre (20), un premier et un second patin (22, 23) de palier connectés à une source commune (27) de fluide, les patins étant alignés mais tournés en sens opposés afin qu'ils positionnent positivement l'arbre entre eux, caractérisé en ce qu'un dispositif respectif (40, 29) d'addition de pressions est monté dans la canalisation de fluide entre la source et chaque patin d'application de pression, chaque dispositif d'addition de pressions étant destiné à maintenir la somme des pressions dans les patins à une valeur sensiblement égale à la pression de la source.

2. Palier hydrostatique d'arbre comprenant, dans un boîtier (21) destiné à une arbre (20), un premier et un second patin (22, 23) de palier connectés ù une source commune de fluide (27), les patins étant alignés mais ayant des sens opposés afin qu'ils positionnent l'arbre positivement entre eux, caractérisé en ce que la source est connectée aux deux patins d'application de pression par l'intermédiaire d'un organe commun (63) de rétrécissement placé dans un dispositif (47) d'addition de pression qui assure le maintien de la somme des pressions dans les patins à une valeur sensiblement égale à la pression de la source.

Fig. 1

Fig. 2

Fig. 3

Fig. 4